# EUROPEAN PATENT APPLICATION

(11) **EP 4 765 583 A1**
(43) Date of publication of application: **24.06.2026**
(21) Application number: 25217737.3
(22) Date of filing: 21.11.2025
(51) Int. Cl.: H02K 1/18, H02K 5/20, H02K 5/24, H02K 9/193

(54) **MOTOR COMPRISING A STATOR AND A COOLING PIPE BEING FIXED INSIDE OF A CASING**

(30) Priority: 20.12.2024 JP 2024225551
(71) Applicant: Toyota Jidosha Kabushiki Kaisha, Toyota-shi, Aichi-ken 471-8571 (JP)
(72) Inventor: YAMATO, Fumiaki, TOYOTA-SHI, AICHI-KEN, 471-8571 (JP); OHIRA, Kengo, TOYOTA-SHI, AICHI-KEN, 471-8571 (JP); USAMI, Kazuaki, TOYOTA-SHI, AICHI-KEN, 471-8571 (JP); OHTA, Kei, TOYOTA-SHI, AICHI-KEN, 471-8571 (JP); MANABE, Hideki, TOYOTA-SHI, AICHI-KEN, 471-8571 (JP); ASAOKA, Hironori, TOYOTA-SHI, AICHI-KEN, 471-8571 (JP); SUZUKI, Yasunori, TOYOTA-SHI, AICHI-KEN, 471-8571 (JP)
(74) Representative: Cabinet Beau de Loménie

(57) **Abstract**

A motor (10) includes a case (50,52), a stator (30), a cooling pipe (60) and at least one bolt (49). A stator core (32) of the stator (30) includes a cylindrical outer peripheral surface (32c), at least one projecting portion (38) protruding from the outer peripheral surface and comprising a bolt fastening hole (39) and at least one stress relaxing hole (36) extending in axial direction. Each stress relaxing hole (36) is disposed in circumferential direction offset to the center of the projecting portion (38). At least one bolt is able to fasten the stator core (32) to the case (50) when inserted into a bolt fastening hole (39). The cooling pipe (60) includes a pipe main body (62) and a hook portion (64) connected to the pipe main body (62). The hook portion (64) is inserted in one stress relaxing hole (36).

## Description

### BACKGROUND OF THE INVENTION

### 1. Field of the Invention

The technology disclosed in the present specification relates to a motor.

### 2. Description of Related Art

A motor disclosed in Japanese Unexamined Patent Application Publication No. 2011-78148 (JP 2011-78148 A) includes a case, a stator, and a cooling pipe. In the case, the stator and the cooling pipe are disposed. A base portion of the cooling pipe is fixed to the case. The case is provided with a pump that supplies a coolant. The coolant is supplied from the pump to the cooling pipe. The cooling pipe ejects the coolant toward the stator.

### SUMMARY OF THE INVENTION

In JP 2011-78148 A, the cooling pipe is fixed to the case at the base portion. In this structure, the cooling pipe easily vibrates to deteriorate NV performance of the motor. Further, when a structure that fixes the cooling pipe to the case for vibration reduction is added, the size of the motor is increased. The present disclosure provides a motor in which a cooling pipe is suitably installed in a case while an increase in size of the motor is suppressed.

A motor according an aspect of the present disclosure includes: a case including a coolant supply path; a stator accommodated in the case; a cooling pipe accommodated in the case, the cooling pipe being connected to the coolant supply path and being configured to eject a coolant toward the stator; and a bolt. The stator includes a stator core configured of a magnetic body. The stator core includes a cylindrical outer peripheral surface, a projecting portion protruding from the outer peripheral surface, a bolt fastening hole provided in the projecting portion, the bolt fastening hole extending along a direction parallel to a center axis of the stator core, and a stress relaxing hole. The stress relaxing hole is provided in an end surface of the stator core, is disposed within an angular range in a circumferential direction where the projecting portion is located with reference to the center axis, and extends along the direction parallel to the center axis. The bolt fastens the stator core to the case in a state in which the bolt is inserted through the bolt fastening hole. The cooling pipe includes a pipe main body, and a hook portion connected to the pipe main body. The hook portion is inserted in the stress relaxing hole.

In the motor according to the aspect of the present disclosure, at least a part of the stress relaxing hole may be positioned in the projecting portion.

In the motor according to the aspect of the present disclosure, the stress relaxing hole may be closer to the center axis relative to the bolt fastening hole.

In the motor, the projecting portion of the stator core is fastened to the case by the bolt. Thus, a stress is applied from the bolt to the projecting portion. The stress relaxing hole suppresses the stress applied to the projecting portion from being applied to a region radially inward (that is, a side closer to the center axis) of the stress relaxing hole of the stator core. This suppresses a magnetic characteristic of the stator core from being reduced. Further, the cooling pipe includes the hook portion, and the hook portion is inserted in the stress relaxing hole. The cooling pipe is positioned relative to the stator core via the hook portion, and hence the cooling pipe is less liable to vibrate. Further, the cooling pipe can be positioned with the use of the stress relaxing hole, and hence it is not required to provide a dedicated structure for positioning the cooling pipe relative to the stator core to the stator core. Thus, this structure makes it possible to suppress the size of the motor from increasing.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exploded perspective view of a motor;
FIG. 2 is a plan view of a motor as viewed along an axial direction from an opening portion of a case;
FIG. 3 is a sectional view taken along the line III of FIG. 2;
FIG. 4 is a sectional view taken along the line IV of FIG. 2; and
FIG. 5 is a sectional view taken along the line V of FIG. 2.

### DETAILED DESCRIPTION OF EMBODIMENTS

In the above-mentioned motor, at least a part of the stress relaxing hole may be positioned in the projecting portion.

With this configuration, an influence of a stress from the bolt can be effectively reduced.

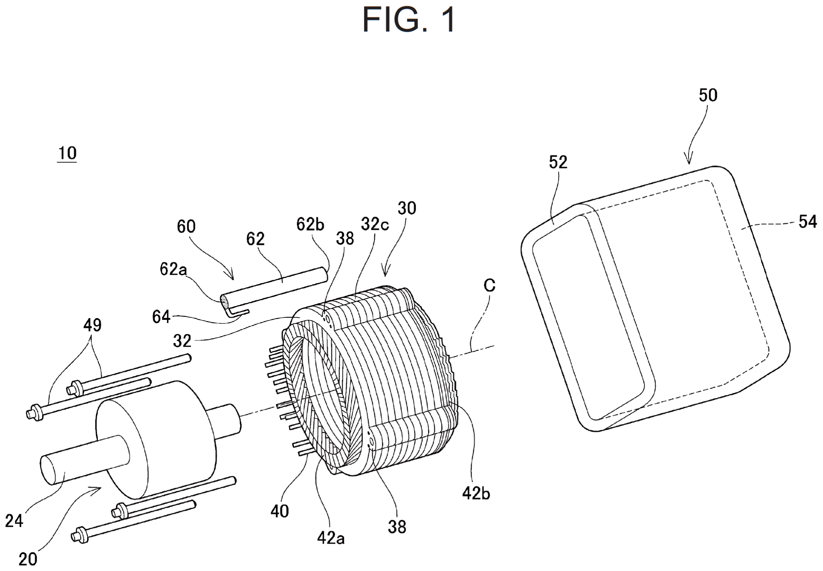

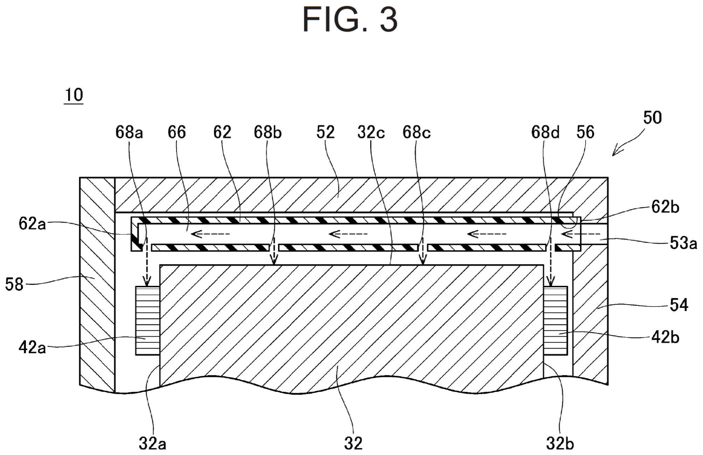

As illustrated in FIG. 1, a motor 10 of an embodiment includes a rotor 20, a stator 30, and a case 50. The rotor 20 and the stator 30 are accommodated in the case 50 in a state in which center axes C thereof coincide with each other. Hereinafter, a direction parallel to the center axis C is referred to as an axial direction. The case 50 includes an outer wall 52 and an end portion wall 54. The outer wall 52 extends along the axial direction and has a section with a substantially-quadrilateral tubular shape. The end portion wall 54 extends along a plane intersecting with the center axis C, and is provided at one end portion of the outer wall 52 in the axial direction. As illustrated in FIG. 3, a lid member 58 is fixed to an opening portion of the case 50. The lid member 58 closes the opening portion of the case 50.

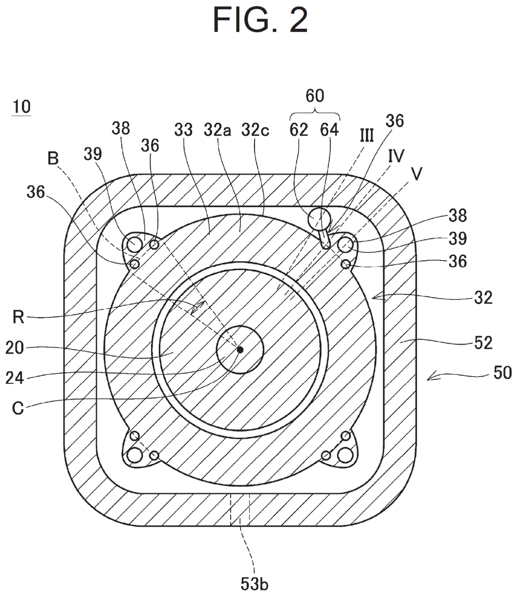

Oil is stored in the case 50. The oil is accumulated in a lower portion of the inside of the case 50. The oil functions as a lubricating oil that lubricates the rotor 20, and also functions as a coolant that cools the stator 30 and the rotor 20. As illustrated in FIG. 2, an oil discharge path 53b is provided in a lower portion of the case 50. As illustrated in FIG. 3, an oil supply path 53a is provided in the end portion wall 54 of the case 50. A recessed portion 56 is provided in an inner surface of the end portion wall 54, in a range including the oil supply path 53a. Outside of the case 50, an oil pump which is not shown is provided. The oil pump supplies the oil from the oil discharge path 53b to the oil supply path 53a via an oil flow path provided outside of the case 50. That is, when the oil pump is actuated, the oil in the case 50 is discharged to the outside of the case 50 from the oil discharge path 53b, and the oil is supplied into the case 50 from the oil supply path 53a.

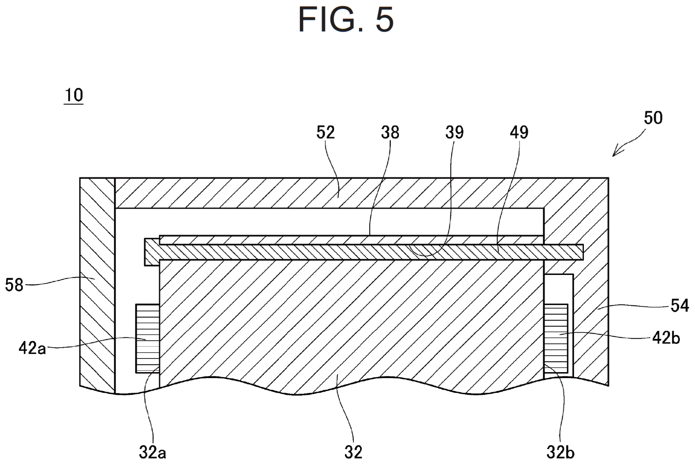

As illustrated in FIG. 1, the stator 30 includes a stator core 32 and a coil 40. The stator core 32 is configured of a plurality of electromagnetic steel sheets stacked in the axial direction. As illustrated in FIG. 2, the stator core 32 includes a cylindrical back yoke 33. Although not shown, a plurality of projecting teeth is provided on an inner peripheral surface of the back yoke 33, and the coil 40 is wound around the teeth. The cylindrical outer peripheral surface of the back yoke 33 configures an outer peripheral surface 32c of the stator core 32. As illustrated in FIG. 3, the stator core 32 includes an end surface 32a and an end surface 32b on both sides in the axial direction. On the end surface 32a, a coil end 42a is provided. On the end surface 32b, a coil end 42b is provided. The coil ends 42a, 42b are bent parts of the coil 40 wound on the stator core 32. The coil end 42a protrudes from the end surface 32a, and the coil end 42b protrudes from the end surface 32b. As illustrated in FIG. 1 and FIG. 2, a plurality of projecting portions 38 protruding from the outer peripheral surface 32c is provided on the outer peripheral surface 32c of the stator core 32. Each of the projecting portions 38 extends from the end surface 32a to the end surface 32b. As illustrated in FIG. 2, a bolt fastening hole 39 is provided in each of the projecting portions 38. As illustrated in FIG. 5, the bolt fastening hole 39 extends along the axial direction, and passes through the projecting portion 38 from the end surface 32a to the end surface 32b. A bolt 49 is inserted through each of the bolt fastening holes 39. The stator core 32 is fastened to the case 50 by the bolts 49.

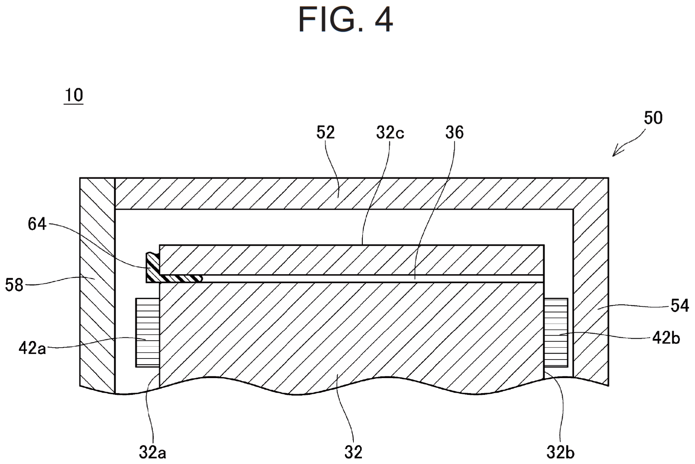

As illustrated in FIG. 2, a plurality of stress relaxing holes 36 is provided in the stator core 32. As illustrated in FIG. 4, the stress relaxing hole 36 extends along the axial direction, and passes through the stator core 32 from the end surface 32a to the end surface 32b. As illustrated in FIG. 2, the stress relaxing hole 36 is a hole disposed within an angular range R in the circumferential direction where the projecting portion 38 is located with reference to the center axis C. The stress relaxing hole 36 is provided at a position closer to the center axis C relative to the bolt fastening hole 39. In this embodiment, the stress relaxing hole 36 is provided at a position including a boundary surface B between the back yoke 33 and the projecting portion 38 (that is, a surface obtained by extending the cylindrical outer peripheral surface 32c). Thus, a part of the stress relaxing hole 36 is disposed in the projecting portion 38. As described above, the projecting portion 38 is fastened to the case 50 by the bolt 49. Thus, a high stress is applied from the bolt 49 to the projecting portion 38. When the stress applied from the bolt 49 is transmitted to the back yoke 33, the magnetic permeability of the back yoke 33 is reduced by the inverse magnetostriction effect. The stress relaxing hole 36 suppresses the stress applied from the bolt 49 to the projecting portion 38 from being transmitted to a region radially inward of the stress relaxing hole 36, thereby suppressing the magnetic characteristic of the back yoke 33 from being reduced.

As illustrated in FIG. 1, the rotor 20 includes a shaft 24. The rotor 20 is disposed in a center hole of the stator 30 such that the center axis of the shaft 24 coincides with the center axis C of the stator 30. Although not shown, a through-hole is provided at the center of the end portion wall 54, and the shaft 24 of the rotor 20 is inserted through the through-hole. Although not shown, a through-hole is provided at the center of the lid member 58, and the shaft 24 of the rotor 20 is inserted through the through-hole. The rotor 20 is rotatably supported relative to the case 50 by a bearing which is not shown.

As illustrated in FIG. 1 and FIG. 2, the motor 10 includes a cooling pipe 60. The cooling pipe 60 is configured of a resin. The cooling pipe 60 is accommodated in the case 50. The cooling pipe 60 includes a pipe main body 62 and a hook portion 64. The pipe main body 62 is a tubular member extending along the axial direction, and includes an end portion 62a and an end portion 62b in its longitudinal direction. As illustrated in FIG. 2 and FIG. 3, the pipe main body 62 is disposed between the outer peripheral surface 32c of the stator core 32 and the outer wall 52 of the case 50. As illustrated in FIG. 3, the end portion 62b of the pipe main body 62 is inserted in the recessed portion 56 provided in the inner surface of the case 50 (that is, the inner surface of the end portion wall 54). It is to be noted that the end portion 62b may be press-fitted into the recessed portion 56. With the end portion 62b being fitted to the recessed portion 56, the pipe main body 62 is fixed to the case 50. As illustrated in FIG. 1, the hook portion 64 is provided in the vicinity of the end portion 62a of the pipe main body 62. The hook portion 64 protrudes from the side surface of the pipe main body 62. The hook portion 64 is bent in the middle and a distal end portion of the hook portion 64 extends parallel to the pipe main body 62. As illustrated in FIG. 2 and FIG. 4, the distal end portion of the hook portion 64 is inserted in the stress relaxing hole 36 from the end surface 32a. It is to be noted that the distal end portion of the hook portion 64 may be press-fitted into the stress relaxing hole 36. With the hook portion 64 being fitted to the stress relaxing hole 36, the pipe main body 62 is fixed to the stator 30. As described above, the cooling pipe 60 is fixed at least at two portions. Thus, the cooling pipe 60 is less liable to vibrate.

As illustrated in FIG. 3, inside the pipe main body 62, an oil flow path 66 extending along an axis of the pipe main body 62 is provided. The oil flow path 66 is connected to the oil supply path 53a at the end portion 62b. Thus, when the oil is supplied to the oil supply path 53a by the oil pump described above, the oil flows from the oil supply path 53a into the oil flow path 66. A plurality of oil ejection orifices 68a to 68d is provided in the outer peripheral wall of the pipe main body 62. The oil ejection orifices 68a to 68d eject the oil in the oil flow path 66 toward the stator 30. The oil ejection orifices 68a ejects the oil toward the coil end 42a. The oil ejection orifices 68b, 68c eject the oil toward the outer peripheral surface 32c of the stator core 32. The oil ejection orifice 68d ejects the oil toward the coil end 42b. With the oil being ejected toward the stator 30 as described above, the stator 30 is cooled.

As described above, in the motor 10, the cooling pipe 60 is fixed at the end portion 62b and the hook portion 64. This makes it difficult for the cooling pipe 60 to vibrate. In particular, the hook portion 64 is provided at a position adjacent to the end portion 62a of the pipe main body 62, and hence the cooling pipe 60 is fixed at both end portions. Accordingly, the vibration of the cooling pipe 60 is effectively reduced. In this manner, the NV performance of the motor 10 is improved. Further, with the hook portion 64 of the cooling pipe 60 being fitted to the stress relaxing hole 36 of the stator core 32, the cooling pipe 60 is fixed relative to the stator core 32. With this configuration, it is not required to provide a dedicated structure for fixing the cooling pipe 60 to the stator core 32, and hence the cooling pipe 60 can be fixed to the stator core 32 without increasing the size of the motor 10. It is to be noted that, in another embodiment, a structure that fixes the cooling pipe 60 to the case 50 or the stator core 32 may be added.

Further, in a manufacturing process of the motor 10, after the stator 30 is fixed in the case 50, the cooling pipe 60 can be mounted into the case 50. At this time, with the cooling pipe 60 being moved along the axial direction such that the hook portion 64 is inserted in the stress relaxing hole 36 and the end portion 62b is inserted in the recessed portion 56, the cooling pipe 60 can be easily fixed in the case 50. Thus, the motor 10 can be efficiently manufactured.

In the above-mentioned embodiment, the coolant is oil, but the coolant may be other liquid.

While the embodiment has been described in detail above, the embodiment is merely illustrative and not intended to restrict the claims. The technology described in the claims includes various modifications and alterations of the above-described specific examples. The technical elements described in this specification or the drawings exhibit technical utility independently or in various combinations, and are not limited to the combinations described in the claims as filed. The technology illustrated in this specification or the drawings achieves a plurality of objects at the same time, and its achieving one of these objects in itself means that it has technical utility.

## Claims

1. A motor (10) comprising:
a case (50) including a coolant supply path;
a stator (30) accommodated in the case (50);
a cooling pipe (60) accommodated in the case (50), the cooling pipe (60) being connected to the coolant supply path and configured to eject a coolant toward the stator (30); and
a bolt (49), wherein:
the stator (30) includes a stator core (32) configured of a magnetic body;
the stator core (32) includes
a cylindrical outer peripheral surface,
a projecting portion (38) protruding from the outer peripheral surface,
a bolt fastening hole (39) provided in the projecting portion (38), the bolt fastening hole (39) extending along a direction parallel to a center axis of the stator core (32), and
a stress relaxing hole (36) provided in an end surface of the stator core (32), the stress relaxing hole (36) being disposed within an angular range in a circumferential direction where the projecting portion (38) is located with reference to the center axis, the stress relaxing hole (36) extending along the direction parallel to the center axis;
the bolt (49) fastens the stator core (32) to the case (50) in a state in which the bolt (49) is inserted through the bolt fastening hole (39);
the cooling pipe (60) includes a pipe main body (62) and a hook portion (64) connected to the pipe main body (62); and
the hook portion (64) is inserted in the stress relaxing hole (36).

2. The motor (10) according to claim 1, wherein at least a part of the stress relaxing hole (36) is positioned in the projecting portion (38).

3. The motor (10) according to claim 1, wherein the stress relaxing hole (36) is closer to the center axis relative to the bolt fastening hole (39).
